# EUROPEAN PATENT SPECIFICATION

(11) **EP 1 158 060 B1**
(45) Date of publication and mention of the grant of the patent: **14.09.2005**
(21) Application number: 00913006.3
(22) Date of filing: 30.03.2000
(51) Int. Cl.: C22C 1/00, C22C 14/00, C22C 27/06, C22C 30/00, C22F 1/11, C22F 1/18

(54) **METHOD FOR PREPARING A HYDROGEN STORAGE ALLOY**
VERFAHREN ZUR HERSTELLUNG EINER WASSERSTOFFSPEICHERLEGIERUNG
PROCEDE DE PREPARATION D'UN ALLIAGE DE STOCKAGE D'HYDROGENE

(30) Priority: 17.12.1999 JP 359899
(43) Date of publication of application: 28.11.2001
(73) Proprietor: Tohoku Techno Arch Co., Ltd., Miyagi 980-0845 (JP); Okada, Masuo, Miyagi 982-0807 (JP); Dowa Mining Co., Ltd., Tokyo 100-8282 (JP)
(72) Inventor: OKADA, Masuo, Sendai-shi, Miyagi 982-0807 (JP); KURIIWA, Takahiro, Utsunomiya-shi, Tochigi 321-0942 (JP)
(74) Representative: Weber, Dieter
(86) International application number: PCT/JP2000/002056
(87) International publication number: WO 2001/044525

(56) References cited:
- DE-A- 4 216 150
- JP-A- 10 121 180
- JP-A- 11 080 865
- JP-A- 11 106 859
- PATENT ABSTRACTS OF JAPAN vol. 1996, no. 02, 29 February 1996 (1996-02-29) -& JP 07 252560 A (JAPAN STEEL WORKS LTD:THE), 3 October 1995 (1995-10-03)
- PATENT ABSTRACTS OF JAPAN vol. 1998, no. 11, 30 September 1998 (1998-09-30) -& JP 10 158755 A (TOYOTA MOTOR CORP), 16 June 1998 (1998-06-16)
- PATENT ABSTRACTS OF JAPAN vol. 1999, no. 08, 30 June 1999 (1999-06-30) -& JP 11 080865 A (SUMITOMO METAL IND LTD), 26 March 1999 (1999-03-26)
- TOMINAGA ET AL.: 'Netsu shori ni yoru Ti-V-Cr kei goukin no soshiki henka to protium kyuzou tokusei' FUNTAI FUNMATSU YAKIN KYOKAI KOUEN GAIYOUSHUU vol. 1999, 03 June 1999, page 51, XP002937081

## Description

### TECHNICAL FIELD

The present invention relates to a method of producing a hydrogen storage metal alloy capable of repeatedly carrying out the absorption and release of hydrogen. In particular, the present invention relates to a method of producing a BCC system hydrogen storage metal alloy having theoretically a high capacity for hydrogen storage. Further, the present invention especially relates to a method of producing a hydrogen storage metal alloy having a highly practicable property, including, for example, not only quantitatively excellent hydrogen adsorption and desorption characteristics within practical pressure ranges and temperature ranges but also a capacity of adsorbing and desorbing hydrogen in quite great amounts per unit weight, together with a relatively inexpensive producibility.

### RELATED ART OF THE INVENTION

At present, there have been worried not only about acid rain due to an increasing NOx (nitrogen oxides) but also about the global warming due to an increasing CO₂ in association with an increase in consumption of fossil fuel such as petroleum. Such environmental destruction has become a serious problem. Therefore, our attention has been greatly concentrated on development and practical application of various kinds of clean energy which is friendly to the earth. Part of means for developing such a new energy is a practical application of hydrogen energy. Hydrogen is a constituent element of water inexhaustibly present on the earth and can be not only produced using various kinds of primary energy but also utilized as fluid energy in place of conventionally used petroleum without the risk of destroying the environment because its product by combustion is only water. In addition, unlike electricity, it has excellent characteristics such as its relatively easy storage.

In recent years, therefore, investigation has been actively conducted involving hydrogen storage metal alloys as media for storage and transport of hydrogen, and their practical application has been expected. Such hydrogen storage metal alloys are metals/alloys which can absorb and release the hydrogen under an appropriate condition and, by the use of such alloys, it is possible to store the hydrogen not only at lower pressure but also at higher density as compared to the case of the conventional hydrogen cylinders. In addition, the hydrogen volume density thereof is nearly equal to or rather more than that of liquid or solid hydrogen.

These hydrogen storage metal alloys which have been practically used until now are AB₅ alloys such as LaNis and AB₂ alloys such as TiMn₂, but their hydrogen absorbing capacity is still insufficient. In recent years, for example, as proposed in Japanese Unexamined Patent Publication (Kokai) No. 10-110225 (JP, A, 10-110225), metals/alloys (the metal includes V, Nb, Ta, etc. and the alloy does TiCrV alloys, etc.) each having a body-centered cubic (hereinafter, referred to as " BCC") structure have been mostly investigated because the number of hydrogen absorbing sites in the crystal lattice is great in the BCC structure and the hydrogen absorbing capacity is as large as H/M = ca. 2 wherein H is occluded hydrogen and M is a constituent element for the alloy (about 4.0 wt%, i.e., it is huge, in alloys of V, etc. having an atomic weight of around 50).

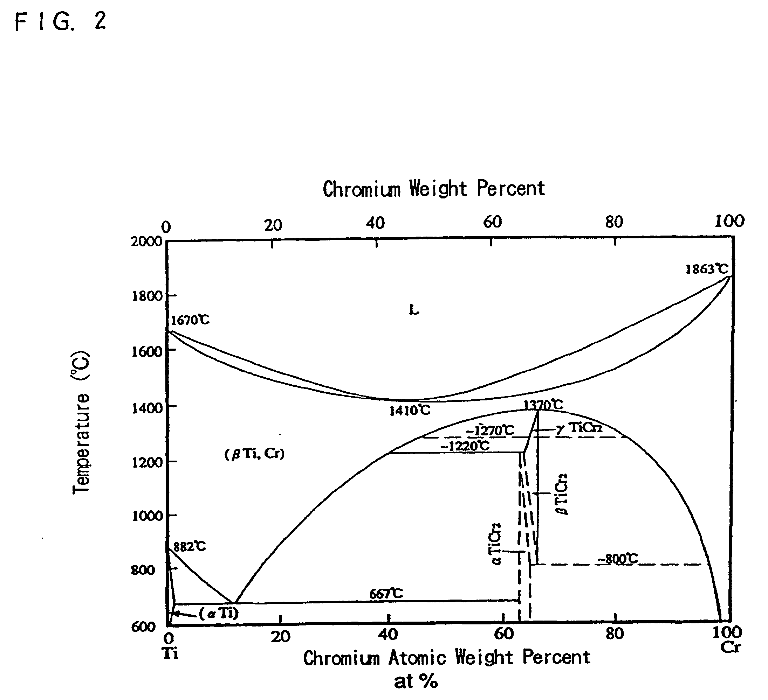

With regard to alloys wherein Ti and Cr are comprised, it has been reported as follows: as suggested in JP, A, 10-110225, when for alloys comprised of only Ti and Cr the admixture ratio of the constituent metals is brought to such an extent that it will be conductible to absorb and release hydrogen at a practicable temperature and pressure (i.e., the atomic ratio of Ti is set at 5 < Ti (at%) < 60), as also apparent from FIG. 2 (phase diagram for the Ti-Cr binary alloy), a temperature range for forming a BCC structure becomes very narrow between a melting point of the alloy and a temperature at which a C14 crystal structure is formed. Consequently, other C14 crystal structure phases which are different from BCC are formed at 90 wt% or more in the alloy and it is very difficult to produce the BCC. Therefore, V is admixed as an element highly capable of forming BCC together with both Ti and Cr in order to attain the BCC structure in a more stable fashion and at a lower temperature. As a result, the aforementioned TiCrV alloys have been produced wherein, unless the amount of V is at least 10% or more, it is difficult to form the BCC as their main phase even by application of heat-treatment whereby no good hydrogen adsorption and desorption characteristics are obtainable.

A Ti-Cr based alloy (comprised of 5 or more elements) having the formula:

Ti_{(100-x-y-z)}CrₓA_{y}B_{z}

wherein A is one member selected from V, Nb, Mo, Ta and W, B is two or more members selected from Zr, Mn, Fe, Co, Ni and Cu, and its crystalline structure is BCC is disclosed in Japanese Unexamined Patent Publication (Kokai) No. 7-252560 (JP, A, 7-252560) and it is pointed out therein that the aforementioned admixture of 5 or more elements is essential for acquiring the aforementioned BCC.

However, there are still problems: since V to be admixed with the aforementioned alloy has an atomic weight approximately similar to that of Ti or Cr, it may be admixed at an elevated quantity without reducing its hydrogen storage capacity per unit weight of the alloy product so much, but because it is very expensive, especially a highly pure material (99.99 % purity) employed for such an alloy is extremely expensive, the price of the alloy product results in a very high level, whereby alloy costs will increase for absorbing and storing an equal amount of hydrogen.

Therefore, for inexpensive alloys free of using precious V, Mo-Ti-Cr and W-Ti-Cr alloys are proposed wherein Mo or W is admixed as, like V, an element highly capable of forming BCC with both Ti and Cr. However, for these Mo and W, as suggested in Japanese Unexamined Patent Publication (Kokai) No. 10-121180 (JP, A, 10-121180), it has been reported as follows: BCC is neither formed in such alloys even by application of heat-treatments when at 0 at% of Mo and/or W nor obtainable as the main phase when admixed at a low level thereof whereby no good hydrogen absorption and desorption characteristics will appear. Accordingly, there are also problems: when the amounts of Mo and W to be admixed increase, the hydrogen absorbing capacity per unit weight of such alloys will lower because of their large atomic weight, and in case where these hydrogen storage metal alloys are used as energy sources for automobiles, bicycles, etc. in the form of hydrogen gas storage tanks and nickel hydrogen batteries, including fuel batteries, when an attempt is made at attaining a necessary electric power and hydrogen-supplying capacity, their weights would increase.

In view of the foregoing points, the present inventors have paid much attention to the aforementioned problems and, as a result, succeeded in the present invention. An object of the present invention is to provide (1) a hydrogen storage metal alloy which is (i) producible in the aforementioned form having BCC main phases even if the level of precious V or Mo and W which each lead to a decrease in hydrogen absorbing capacity per unit weight is made null or as minimal as possible, also (ii) excellent in view of its cost and hydrogen absorbing capacity per unit weight and (iii) highly practicable and (2) a process for producing the same.

### SUMMARY OF THE INVENTION

In order to solve the aforementioned problems, the present invention provides a process for producing a hydrogen storage metal alloy having a main phase with body-centered cubic structure wherein the body-centered cubic structure phase enables adsorption and desorption of hydrogen, comprising the steps of:
(1) providing the elements of the alloy corresponding to a composition of the following general composition formula:

   (i) Ti_{(100-a-0.4b-n1[d+e])}Cr_{(a-0.6b-n2[d+e])}V_{(b-n3[d+e])}X_{d}Tₑ

   wherein
   X is at least one or more other elements selected from the group consisting of Al, Ge, Ga, Si, Au and Pt,
   T is at least one or more other elements selected from the group consisting of Nb, Ta, Mn, Fe, Al, B, C, Co, Cu, Ga, Ge, a lanthanoid metal, N, Ni, P, and Si, and
   20 ≤ a (at%) ≤ 80,
   0 ≤ b (at%) ≤ 10;
   0 ≤ d (at%) ≤ 20
   0 ≤ e (at%) ≤ 10 and
   n1+n2+n3 = 1, or

   (ii) Ti_{(100-a-0.4b-n1[d+e])}Cr_{(a-0.6b-n2[d+e])}M_{(b-n3[d+e])}X_{d}Tₑ

   wherein
   M is at least a member selected from molybdenum (Mo) and tungsten (W),
   X is at least one or more other elements selected from the group consisting of Al, Ge, Ga, Si, Au and Pt,
   T is at least one or more other elements selected from the group consisting of Nb, Ta, Mn, Fe, Al, B, C, Co, Cu, Ga, Ge, a lanthanoid metal, N, Ni, P, and Si, and
   20 ≤ a (at%) ≤ 80,
   0 ≤ b (at%) ≤ 5;
   0 ≤ d (at%) ≤ 20
   0 ≤ e (at%) ≤ 10 and
   n1+n2+n3 = 1, or

   (iii) Ti_{(100-a-0.4b-n1[d+e])}Cr_{(a-0.6b-n2[d+e])}V_{(b-c-n3[d+e])}M_{(c-n4[d+e])}X_{d}Tₑ

   wherein
   M is at least a member selected from molybdenum (Mo) and tungsten (W),
   X is at least one or more other elements selected from the group consisting of Al, Ge, Ga, Si, Au and Pt,
   T is at least one or more other elements selected from the group consisting of Nb, Ta, Mn, Fe, Al, B, C, Co, Cu, Ga, Ge, a lanthanoid metal, N, Ni, P, and Si, and
   20 ≤ a (at%) ≤ 80,
   0 ≤ b (at%) ≤ 10;
   0 ≤ c (at%) ≤ 5,
   0 ≤ d (at%) ≤ 20
   0 ≤ e (at%) ≤ 10 and
   n1+n2+n3+n4 = 1,
(2) repeatedly melting and solidifying to form a heated homogeneous alloy;
(3) maintaining the heated homogeneous alloy at a temperature within a range just below the melting point of the alloy for a predetermined time of from 1 minute to 2 hours, and
(4) rapidly cooling the alloy from step (3) in an iced water.

Such characteristics lead to the following: the level of V can be brought to either not more than 10 at% or 0, thereby enabling the amount of necessary precious V to be reduced or nullified, with the result that hydrogen storage metal alloys thus obtained will become inexpensive, provided that other elements can be optionally admixed as long as their admixture does not have a great influence on the aforementioned properties of the hydrogen storage metal alloys.

It is preferred that the hydrogen storage metal alloys of the present invention are those wherein the atom % (at%) of element, V, contained in the metal alloy may be within a range of 6+/-2 at%. As a result thereof, the alloys can have a higher hydrogen storage capacity per unit weight within a V level range of not more than 10 at% as aforementioned.

Such characteristics further lead to the following: (1) the level of Mo or W can be brought to either less than 5 at% or 0, thereby enabling the reduction of a hydrogen storage capacity per unit weight, depending on an increase in weight of the resultant alloy, to be minimized or nullified; and (2) since the alloys may contain no precious V, they can also be produced inexpensively, provided that other elements can be optionally admixed as long as their admixture does not affect greatly the aforementioned properties of the hydrogen storage metal alloys.

In a preferred embodiment of the present invention said melting and solidification operations are carried out repeatedly for predetermined times in step (2).

In another preferred embodiment of the present invention said predetermined time in step (3) is from 1 minute to 1 hour.

In yet another preferred embodiment of the present invention the hydrogen storage metal alloys are those wherein the atom % (at%) of Mo and/or W, contained in the metal alloy may be within a range of 3 +/- 1.5 at%. As a result thereof, the alloys can have a higher hydrogen storage capacity per unit weight within a Mo and/or W level range of less than 5 at% as aforementioned.

In embodiments of the present invention part of the content of precious V can be replaced with at least one member selected from Mo and W which are each potently capable of forming a BCC structure together with Ti and Cr in the same manner as V, thereby enabling not only the cost to be relatively low but also a decrease in hydrogen storage capacity per unit weight, brought about by the incorporation of Mo or W, to be limited to a relatively minor one, with the result that the hydrogen storage metal alloys can be produced which come to an excellent balance between the cost and the hydrogen storage capacity per unit weight and become advantageously practicable, provided that other elements can be optionally admixed as long as their admixture does not affect greatly the aforementioned properties of the hydrogen storage metal alloys.

In another preferred embodiment of the present invention the elements of the alloy correspond to the composition of the following general composition formula:

Ti_{(100-a-0.4b-n1[d+e])}Cr_{(a-0.6b-n2[d+e])}V_{(b-n3[d+e])}X_{d}Tₑ

wherein
X is at least one or more other elements selected from the group consisting of Al, Ge, Ga, Si, Au and Pt,
T is at least one or more other elements selected from the group consisting of Nb, Ta, Mn, Fe, Al, B, C, Co, Cu, Ga, Ge, a lanthanoid metal, N, Ni, P, and Si, and
20 ≤ a (at%) ≤ 80,
b is within a range of 6 ± 2 (at %);
0 ≤ d (at%) ≤ 20
0 ≤ e (at%) ≤ 10 and
n1+n2+n3 = 1.

It is preferred that the hydrogen storage metal alloys of the present invention are those wherein an element, X, having an atomic radius greater than that of Cr but smaller than that of Ti may be contained at its atom % concentration, d (at%), ranging within 0 ≤ d (at%) ≤ 20. X is at least one or more other elements selected from the group consisting of Al, Ge, Ga, Si, Au and Pt.

The admixture of the element X, having an atomic radius which is larger than that of Cr but smaller than that of Ti, inhibits thereby the formation of a C14 (Laves phase) structure so as to extend a temperature range for forming a BCC structure phase in place of the aforementioned C14 (Laves phase) structure, with the result that the hydrogen storage metal alloys can be produced with the BCC structure phase in a stable fashion even at low levels of V, Mo and W, which each have a potent BCC structure-forming capability with both Ti and Cr. The selected elements X have an excellent capability of forming a metal alloy with Ti and Cr.

It is preferred that the hydrogen storage metal alloys of the present invention are those wherein an element, T, may be contained at its atom % concentration, e (at%), ranging within 0 ≤ e (at%) ≤ 10, wherein the said element T is at least one or more other elements selected from the group consisting of Nb, Ta, Mn, Fe, Al, B, C, Co, Cu, Ga, Ge, a lanthanoid metal, N, Ni, P, and Si.

The admixture of the element T thereby enables a plateau pressure at which the resultant hydrogen storage metal alloys can absorb and release hydrogen to be appropriately controlled.

According to the present invention, the process for producing the hydrogen storage metal alloy, having as the main phase a body-centered cubic structure-type phase enabling the adsorption and desorption of hydrogen, comprises the steps of:
(1)providing the elements of the alloy corresponding to any of the above identified compositions;
(2) repeatedly melting and solidifying to form a heated homogeneous alloy (melting step);
(3) maintaining the heated homogeneous alloy at a temperature within a range just below the melting point of the alloy for a predetermined time of from 1 minute to 2 hours (heat treatment), and
(4) rapidly cooling the alloy from step (3) in an iced water (quenching step).

The present invention enables the production of hydrogen storage metal alloys having as the main phase a BCC-type phase with regard to not only a Ti-Cr binary alloy, which is presumed to be hardly produced, but also an alloy wherein V, Mo and W are contained at low levels.

The melting and solidification are carried out repeatedly predetermined times at the aforementioned melting step in the hydrogen storage metal alloy-producing process according to the present invention. As a result thereof, such repeated melting and solidifying treatments enables not only to produce alloys having an improved uniformity wherein a BCC-type structure phase is formed at a higher rate but also to prevent the occurrence of a spinodal decomposing composition as much as possible.

Described below are bases of the selected compositions for hydrogen storage metal alloys according to the present invention. FIG. 2 depicts a Ti-Cr binary system phase diagram in connection with the present invention. As seen in FIG. 2, the BCC phase is present throughout all composition ranges of Ti and Cr over 1643K (1370°C). In light of the atomic radius of Ti (0.147 nm) greater than that of Cr (0.130 nm), when the level of Ti increases and the level of Cr lessens, the alloy will increase its BCC phase lattice constant but lower its plateau pressure. The plateau pressure of the hydrogen storage metal alloy may vary depending on its alloy-working temperature. It is preferred that the Ti/Cr ratio may vary in order to acquire a desired working temperature and consequently a suitable Ti/Cr ratio can be selected. Although a starting composition is brought to the extent of Ti₄₀Cr₆₀ in order to acquire a suitable plateau pressure at 40 °C (313K) in examples as described hereinbelow, the present invention is not limited to. The plateau pressure of such hydrogen storage metal alloys not only varies depending on their alloy-working temperature but also is controllable by varying a Ti/Cr ratio for Ti-Cr-M hydrogen storage metal alloys including Ti-Cr alloys and Ti-Cr-V alloys. The plateau pressure remarkably rises when the Cr level "a" exceeds 80 at% while the plateau pressure becomes extremely low when it is below 20 at%, thereby leading to a poor practicability. Accordingly, it is preferred that the Ti/Cr ratio may be selected which is suited for a desired working temperature within a range of 20 ≦ a (at%) ≦ 80.

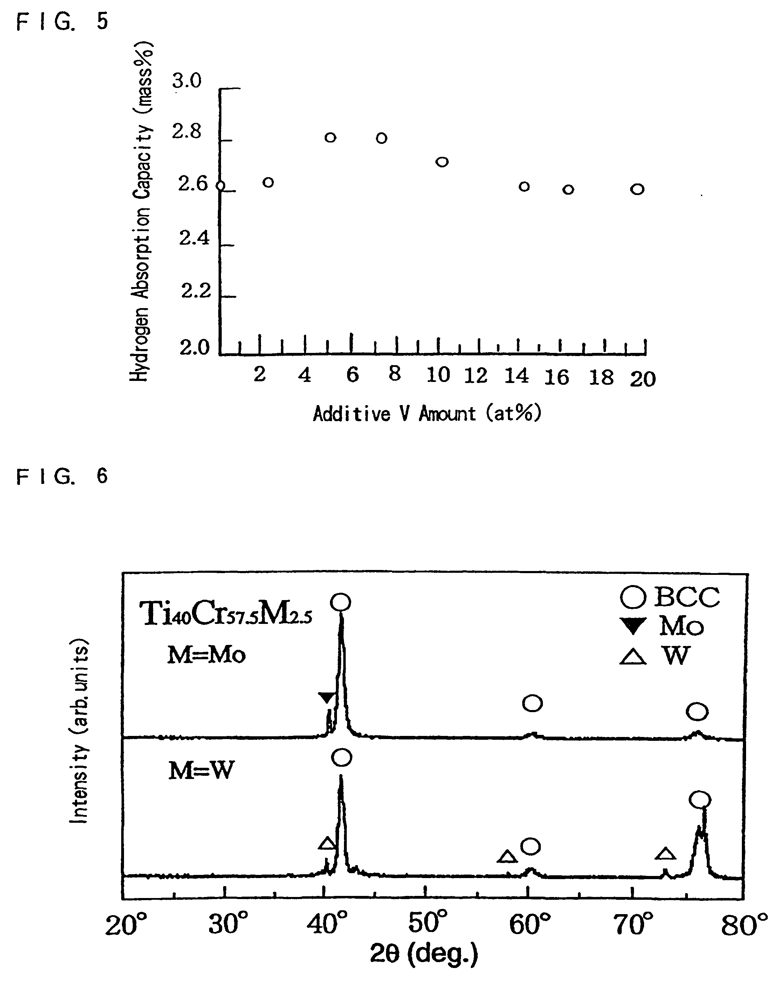

Although the addition of V to such Ti-Cr binary alloys is effective in facilitating the formation of their BCC type structure as aforementioned, an excessive admixture of V leads to a decrease in their hydrogen adsorption and desorption characteristics as shown in FIG. 5, and when the V level is over about 10 at%, the admixture of such precious V will not make any sense. In light of the foregoing points, it is derived that the fundamental formula:

Ti_{(100-a-0.4b)}Cr_{(a-0.6b)}V_{b}

will be within a range of 0 ≦ b (at%) ≦ 10. Further, the addition of substituent element T to such alloys having the fundamental formula:

Ti_{(100-a-0.4b)}Cr_{(a-0.6b)}V_{b}

is effective in adjusting the plateau pressure wherein T is at least one or more elements selected from the group consisting of Nb, Ta, Mn, Fe, Al, B, C, Co, Cu, Ga, Ge, Ln (a variety of lanthanoid metals), N, Ni, p, and Si, and an amount of substituents is 0 ≦ c (at%) ≦ 10.

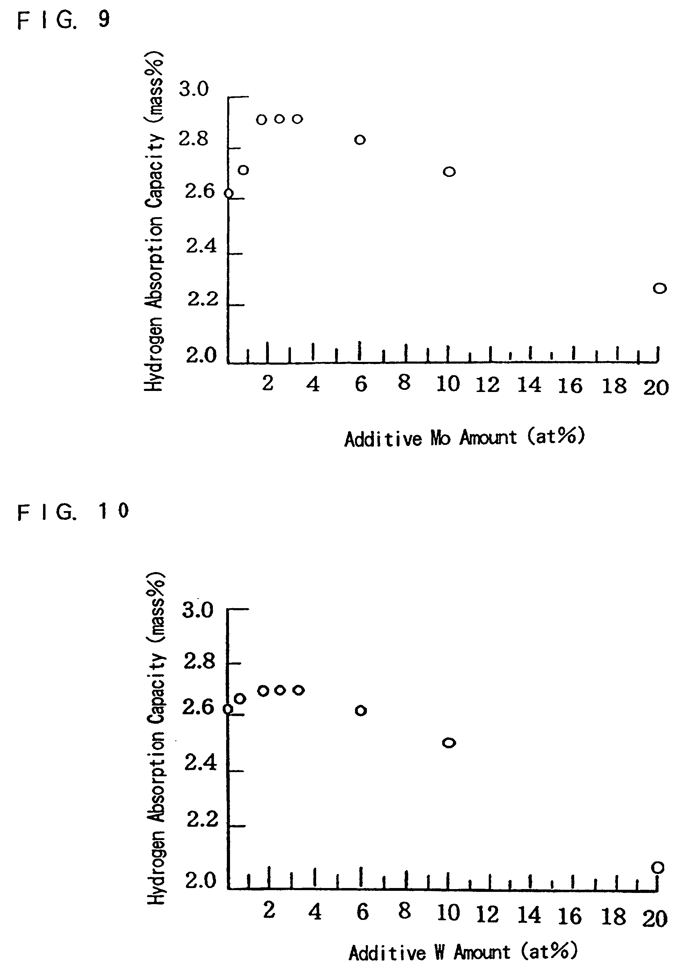

Although Mo and W elements each have a great BCC structure-forming property to Ti-Cr binary alloys and the admixture of Mo or W with the Ti-Cr binary alloy is effective in facilitating the formation of the BCC structure, an excessive admixture of Mo and/or W will lead to an increase in density for hydrogen storage metal alloy products because such Mo and W are heavy elements with a relatively large atomic weight. As seen in FIGs. 9 and 10, when their level exceeds about 5 at%, the hydrogen adsorption and desorption characteristics which reach to the maximum will be led to a significant decrease. In light of the foregoing points, the fundamental formula:

Ti_{(100-a-0.4b)}Cr_{(a-0.6b)}M_{b}

wherein a is 20 ≦ a (at%) ≦ 80, b is 0 ≦ b (at%) < 5 and M is at least one element selected from Mo and W, is derived. The admixture of substituent element T with the resultant metal alloys is also effective in adjusting the plateau pressure in the same fashion as aforementioned, provided that T is at least one or more elements selected from the group consisting of Nb, Ta, Mn, Fe, Al, B, C, Co, Cu, Ga, Ge, Ln (various lanthanoid metals), N, Ni, P and Si, and an amount of substituents is 0 ≦ c (at%) ≦ 10.

Further, although element V has an atomic weight approximately equivalent to that of Ti or Cr and is precious, even a large quantity of its substituent leads to a less increase in molecular weight for alloy products whereby there is an advantage that an amount of occluded hydrogen per unit weight will not be reduced much. In contrast, since Mo and W each have a great BCC structure-forming property to Ti-Cr binary alloys, the admixture of Mo and/or W with the Ti-Cr binary alloy is effective in facilitating the formation of BCC in alloy products. However, an excessive admixture of Mo and W will lead to a decrease in hydrogen adsorption and storage characteristics because of heavy elements each having a large atomic weight. Hence, to make better use of both the advantages, a novel composition is invented wherein part of precious V is replaced with Mo and/or W, i.e., an alloy composition of the following fundamental formula:

Ti_{(100-a-0.4b)}Cr_{(a-0.6b)}V_{(b-c)}M_{c}

wherein 20 ≦ a (at%) ≦ 80, 0 ≦ b (at%) ≦ 10, 0 ≦ c (at%) < 5, and M is at least one element selected from Mo and W, is greatly practicable in view of its cost and its occluded hydrogen quantity as well as its BCC structure-forming capability. As before, the admixture of substituent element T with such a composition is also effective in adjusting the plateau pressure wherein T is at least one or more elements selected from the group consisting of Nb, Ta, Mn, Fe, Al, B, C, Co, Cu, Ga, Ge, Ln (various lanthanoid metals), N, Ni, P and Si.

Alloys having a low level of these elements and Mo or W are hardly formed in the structure of BCC as pointed out in the prior art. As apparent from the phase diagram of a Ti-Cr binary alloy (FIG. 2), this is attributable to the fact that a temperature range for affording the BCC structure is too narrow throughout the Ti-Cr admixture ratios wherein temperature and pressure ranges at which the hydrogen storage metal alloy can work will be within practicable values, i.e., at the Cr level of 20 to 80 at%.

As seen in the aforementioned phase diagram (FIG. 2), however, when the level of Cr is gradually reduced from 60 at% (it has the same meaning as the level of Ti gradually increase from 40 at%), a temperature range eligible for giving a BCC structure would expand. This is presumably attributed to the following: since the Laves phase is represented by a composition of a AB₂ type and the atomic radius ratio of A to B (rA : rB) = about 1.225 : 1 is necessary for forming an ideal geometric structure in such a composition while the atomic radius ratio of Ti to Cr, both of which are used according to the present invention, is 1.13 : 1, which is far different from the above ideal value and unsuitable for forming the ideal Laves phase structure, Ti will quantitatively increase, and invade B sites in apparently more quantities whereby consequently the atomic radius ratio at A sites will become close to that at B sites, thereby inhibiting the formation of Laves phases.

Now, by developing such ideas, when an element having an atomic radius smaller than that of the A site but larger than that of the B site is admixed therewith for substitution, not only the penetration of the substituent element into the A site can inhibit the formation of Laves phase but also that into B site can it similarly.

Hence, it has been thought that there is a possibility of enabling a BCC formation in alloy products similarly to the above V case as well as the Mo or W case and therefore element X (its atomic radius is smaller than that at the A site (Ti) but larger than that at the B site (Cr)) can be admixed with the alloy to expand a temperature range eligible for forming BCC whereby a hydrogen storage metal alloy may be produced with a BCC structure in a more stable fashion.

The element X, the atomic radius of which is smaller than that at the A site (Ti) but larger than that at the B site (Cr), includes, for example, at least one or more elements selected from the group consisting of Al (0.143 nm), Si (0.132 nm), Ga (0.141 nm), Ge (0.137 nm), Au (0.146 nm) and Pt (0.139 nm) in view of Ti atomic radius with 0.147 nm and Cr with 0.130 nm.

### BRIEF DESCRIPTION OF THE DRAWINGS

FIG. 1 is a flow chart illustrating a process for producing the hydrogen storage metal alloy according to an embodiment of the present invention.
FIG. 2 depicts a Ti-Cr binary system phase diagram.
FIG. 3 is an X-ray diffraction pattern of as heat-treated (at 1400 °C for 1 hour) alloy

   VₓTi_{37.5}Cr_{62.5-x}.
FIG. 4 is a graph showing hydrogen absorption and desorption characteristics (at 40 °C) for as heat-treated (at 1400°C for 1 hour) alloy

   VₓTi_{37.5}Cr_{62.5-x}.
FIG. 5 is a graph showing the relationship of admixed amounts of V versus hydrogen absorption and desorption characteristics for a Ti-Cr-V alloy.
FIG. 6 is an X-ray diffraction pattern of as heat-treated (at 1400 °C for 1 hour) alloy

   Ti₄₀Cr_{57.5}M_{2.5} (M = Mo, W).
FIG. 7 is a graph showing hydrogen absorption and desorption characteristics (at 40 °C) for as heat-treated (at 1400°C for 1 hour) alloy Ti₄₀Cr_{57.5}Mo_{2.5}.
FIG. 8 is a graph showing hydrogen absorption and desorption characteristics (at 40 °C) for as heat-treated (at 1400°C for 1 hour) alloy Ti₄₀Cr_{57.5}W_{2.5}.
FIG. 9 is a graph showing the relationship of admixed amounts of Mo versus hydrogen absorption and desorption characteristics for a Ti-Cr-Mo alloy.
FIG. 10 is a graph showing the relationship of admixed amounts of W versus hydrogen absorption and desorption characteristics for a Ti-Cr-W alloy.
FIG. 11 is an X-ray diffraction pattern each of as heat-treated (at 1400 °C for 1 hour) alloys

   Ti_{37.5}Cr₆₀V_{2.5} and Ti_{37.5}Cr₆₀Mo_{1.25}V_{1.25}.
FIG. 12 is an X-ray diffraction pattern each of as prepared by melting and as heat-treated alloys Ti₄₀Cr₆₀.
FIG. 13 is an X-ray diffraction pattern each of as heat-treated (at 1400 °C for 1 hour) alloy Ti_{42.5}Cr_{57.5} and as heat-treated (at 1400 °C for 2 hours) alloy Ti₄₀Cr₆₀.
FIG. 14 is a graph showing hydrogen absorption and desorption characteristics (at 40 °C) for as heat-treated alloy Ti_{42.5}Cr_{57.5}.
FIG. 15 is an X-ray diffraction pattern of as heat-treated (at 1400 °C for 1 hour) alloy Ti₄₀Cr_{57.5}Al_{2.5}.
FIG. 16 is a graph of hydrogen absorption and desorption characteristics (release curve, 40 °C, 5th cycle) upon application of differential temperature method to alloy

   VₓTi_{37.5}Cr_{62.5-x}.

### BEST MODE FOR CARRYING OUT THE INVENTION

Described below are the hydrogen storage metal alloys of the present invention and processes of the production of the said metal alloys in detail, relying on experiments conducted by the present inventors.

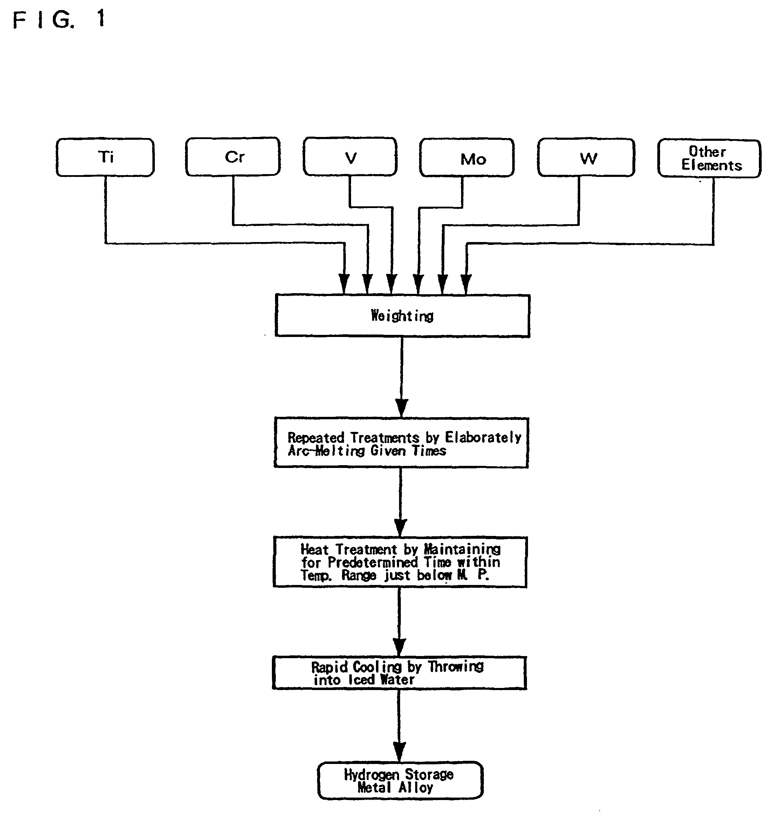

First, FIG. 1 is a flow chart showing a preferred embodiment of the process for producing the hydrogen storage metal alloys according to the present invention. Such a process has been applied to the production of hydrogen storage metal alloys used in the experiments conducted by the present inventors as described hereinbelow.

In this process of the production of hydrogen storage metal alloys, each constituent element for a desired hydrogen storage metal alloy (for example, each of Ti, Cr and V in case of producing Ti_{37.5}Cr₆₀V_{2.5}) was weighed at an amount corresponding to each composition ratio so as to bring the total weight of a resultant ingot to 12.5g.

Each individual metal thus weighed was thrown into an arc melting plant (not depicted), subjected to repeated treatments (melting-stirring ← → solidification) predetermined times (which may vary depending on the number of constituent elements in experiments but be usually approximately 4 to 5 times) in an argon atmosphere of about 40 kPa with scrupulous care to elevate a uniformity and the resultant homogenized ingot was then maintained at a temperature region just lower than the melting point of its melt for a predetermined time to accomplish the heat treatment.

Since a temperature region at which BCC forms are produced is present at an area just below the melting temperature owned by an alloy having a target composition as shown in the above FIG. 2 (phase diagram), the heat-treatment may be preferably effected at such a temperature region at which the BCC is produced and just below the melting temperature. For example, in case of a composition containing about 60 at% of the aforementioned element Cr, although the heat-treatment is preferably effected by holding the molten alloy at about 1400 °C, it is preferable to select a suitable heat-treating temperature from temperature areas at which a target alloy is produced in the form of BCC and just below the melting temperature of the target alloy, depending on its alloy composition. Among temperature areas at which the BCC is produced and just below the melting temperature thereof, it should be noted that it will take a longer time to accomplish the heat-treatment when the treatment temperature is too low (not more than about 1000 °C) while it will take only a short time but heating will cost us too much when it is too high. Therefore, by taking the foregoing points into account, it is preferable to select a heat-treating temperature.

When a heat-treating time is too short, it will be impossible to accomplish the formation of sufficient BCC structure phases while when it is too long treating, costs will rise dependently on heating for a long period. Although it is therefore preferred that the heat treatment can be conducted for a period suitably selected on the basis of a selected heat-treating temperature, it may be carried out preferably for a period of from 1 min to 100 hours, more preferably from 10 min to 24 hours, in the embodiment, from 1 to 2 hours.

In the Examples, alloys per se were subjected to the aforementioned heat treatment after melting ingots without making any shapes. Since such a process does not require that cooled alloys are re-heated but enables us to produce efficiently alloy products having a BCC structure phase, it is preferable but the present invention is not limited to. For example, it may be preferred that molten alloys are shaped once by methods such as strip casting, mono roll casting and atomizing methods to afford plates, ribbons or powders, then cooled and the resultant alloys each having either the BCC phase + the Laves phase or the Laves phase alone are subjected to the aforementioned heat treatment so as to form the BCC structure phase as the main phase.

Among these alloys, alloys (ingots) heat treated to an extent that the BCC structure phase takes place as the main phase are rapidly cooled by dipping into ice water to give alloy products in the form of holding the above BCC structure phase.

Although the aforementioned rapid cooling has been carried out by dipping into ice water, the present invention is not limited to and any can be arbitrarily selected for these cooling methods. However, since the volume ratio of BCC structural phase varies depending on cooling rates and a slow cooling rate leads to a decrease in BCC structural phase volume ratio, it is desired that the alloy is rapidly cooled preferably at a cooling rate of more than 100K/sec.

Although the alloys of the present invention have a composition apt to induce a spinodal decomposition readily, it is defined that they are acceptable to the extent there is an unavoidable formation because spinodal decomposing tissues cause deterioration of alloy's hydrogen absorption and desorption characteristics.

Hereinbelow not only it has been examined and ascertained whether or not the BCC structural phase is produced as the main phase by the aforementioned production processes for each composition but also experimental results are shown which support bases of the above selected compositions.

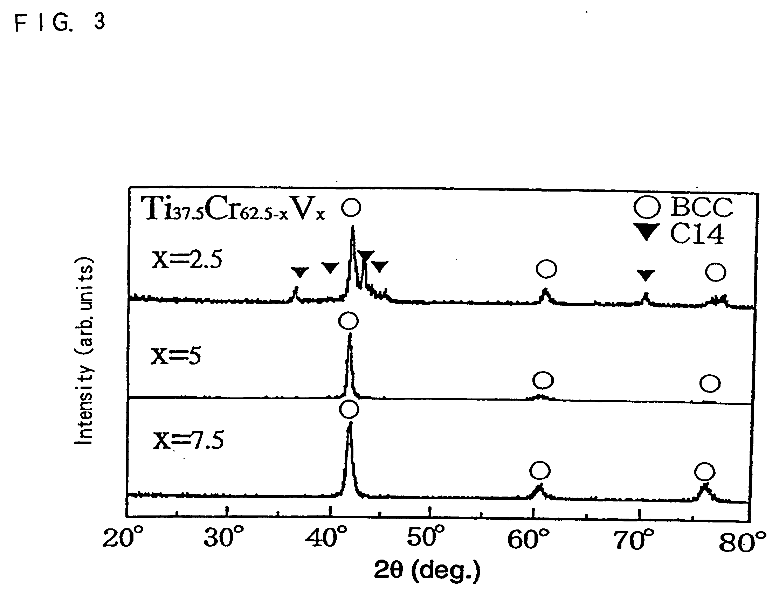

An X-ray diffraction pattern of an alloy product obtained by heat-treating VₓTi_{37.5}Cr_{62.5-x} alloy at 1400°C for 1 hour is shown in FIG. 3. As apparent from FIG. 3, even when V which is presumed to be hardly utilizable in the prior art as aforementioned is admixed at 2.5 at%, the BCC takes place as the main phase and when V is set to 5 at% and 7.5 at%, respectively, the alloys are produced in the form of a BCC mono phase.

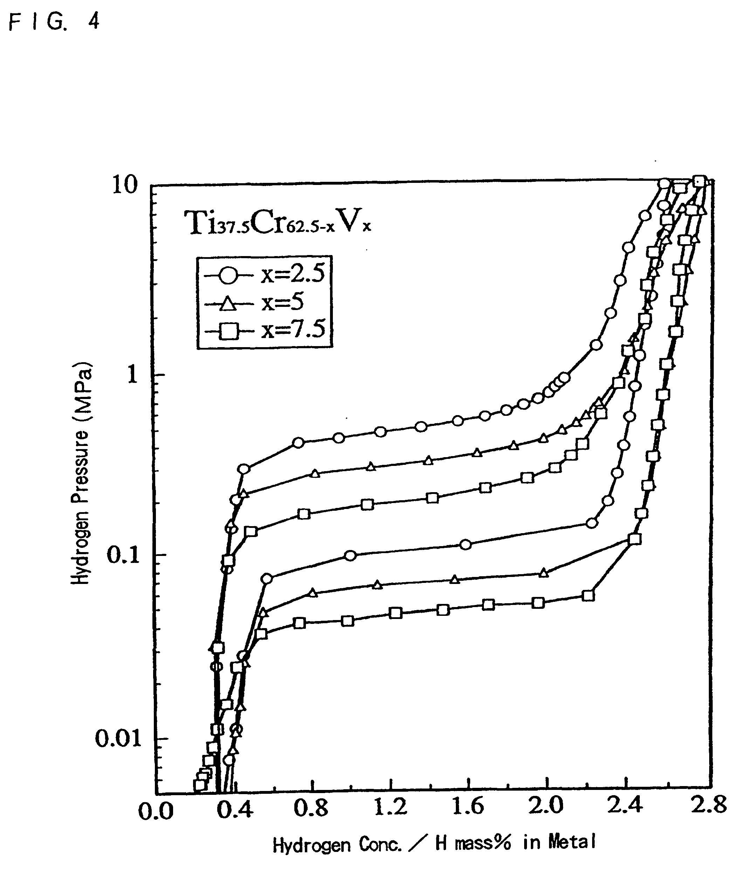

The fact that each alloy as shown in FIG. 3 has the BCC structure reflects on its hydrogen absorption and desorption characteristics as shown in FIG. 4. Thus, it has been found that the BCC mono phase alloys wherein V is contained at 5 at% and 7.5 at% can absorb and release hydrogen at about 2.8 wt% which is approximately equal to or more than the amount achieved by the prior art alloy containing 10 at% or more of V. Further, it has been found that even the alloy wherein V is contained at 2.5 at% can absorb and release hydrogen at about 2.6 wt % which is approximately equal to the amount achieved by the prior art alloy containing 10 at% or more of V.

This is that the admixture of V with the Ti-Cr binary alloy derives an increase in BCC structural phase volume ratio, whereby an amount of occluded hydrogen increases over that attained by the Ti-Cr binary alloy. Thus, it has been found that V is an element greatly apt to produce a BCC form and effective for bringing advantageous hydrogen absorption and desorption characteristics owned by the BCC phase into the Ti-Cr binary alloys. The hydrogen absorption and desorption characteristics affected by amounts of admixed V in connection with these Ti-Cr-V alloys were examined. The results are shown in FIG. 5.

The results as shown in FIG. 5 are unexpected ones. When an amount of the admixed element V is brought to 10 at% or more, which was considered to be preferable in the prior art, it is ascertained that target alloys to be produced are improved for their capability of forming the BCC phase and consequently alloy products having the BCC phase become manufacturable in a stable fashion according to an increase in amount of element V to be admixed; nevertheless, it results in their hydrogen storage capacity per unit weight equal to or less than that of V-free Ti-Cr binary alloys (without other materials). It is therefore apparent that their hydrogen storage capacity per unit weight reaches to a maximum at a V admixture amount of not more than 10 at%, especially 6 ± 2 at%, contrary to conventional understanding in the prior art. Accordingly, it is found that an amount of admixed V can be set to such a region so as to not only prevent an increase in cost for alloys due to production by unnecessarily admixing an excessive amount of precious V but also increase a hydrogen storage capacity per unit weight.

Next, the aforementioned production process has been applied to Ti-Cr-Mo (W) system hydrogen storage metal alloys which have been associated with the aforementioned problems, for example, when Mo and W which are each a heavy element having a high capability of forming BCC against Ti-Cr alloys but a large atomic weight, are admixed in large quantities, the alloy products hardly exert sufficient properties, etc. Each level of Mo and W therein has been examined. The results are described hereinbelow.

An X-ray diffraction pattern each of as heat-treated alloys Ti₄₀Cr_{57.5}Mo_{2.5} and Ti₄₀Cr_{57.5}W_{2.5} is shown in FIG. 6. It is found from the X-ray diffraction pattern as shown in FIG. 6 that, although Mo is admixed at a small amount, i.e., at 2.5 at% only, the resultant alloy products are in the form of a BCC mono phase. For W, BCC phases are produced as the main phase though a few Laves phases are present.

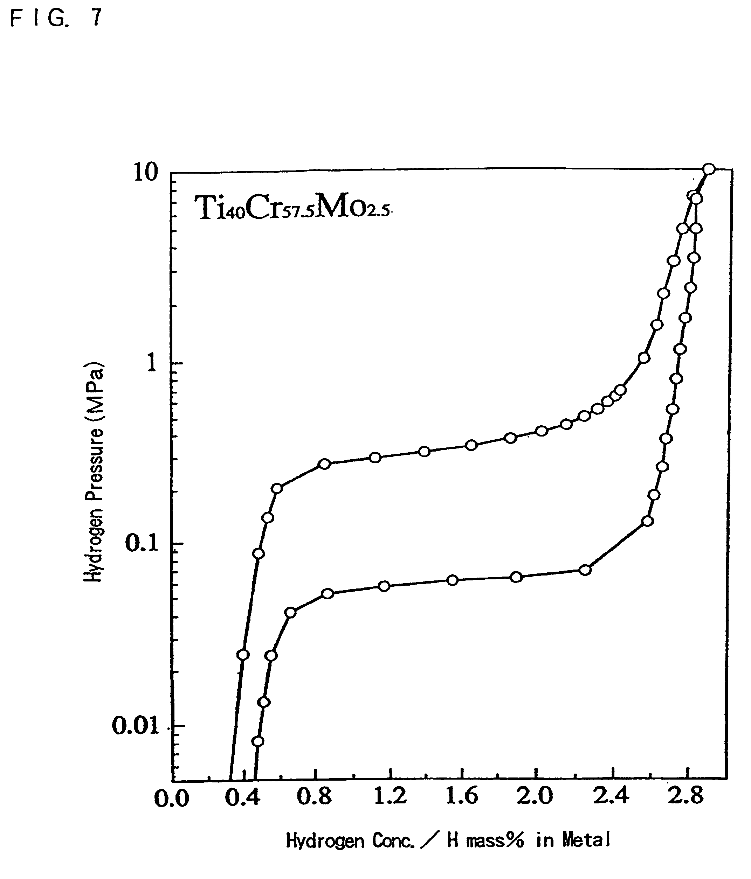

Further, hydrogen adsorption and desorption Characteristics of as heat-treated alloy Ti₄₀Cr_{57.5}Mo_{2.5} are shown in FIG. 7. It has been noted therefrom that an amount of hydrogen occluded thereby is derived to an extent of about 2.9 wt% close to a value of 3 wt% corresponding to the maximal capacity which is considered to be intrinsically owned by the Ti-Cr binary BCC phase.

From these results, it has been found that Mo can be admixed even at a smaller amount than V so as to produce almost the BCC mono phase. Thus, it is noted that, as compared to the foregoing Ti-Cr-V alloys, an amount of additives can be reduced whereby a good property has been achieved.

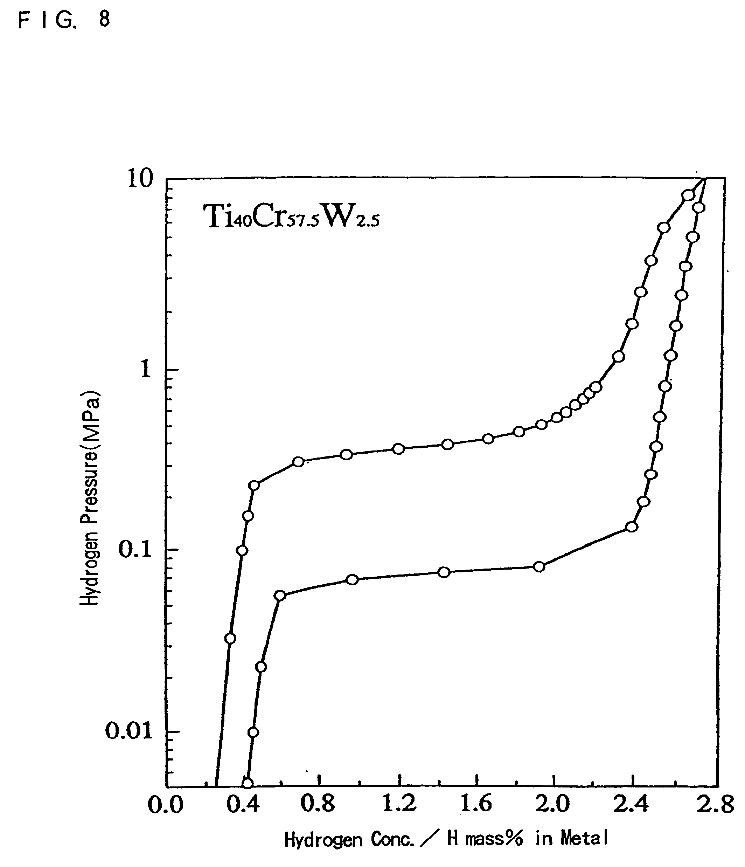

Hydrogen adsorption and desorption characteristics of as heat-treated alloy Ti₄₀Cr_{57.5}W_{2.5} are also shown in FIG. 8. Similarly to the aforementioned Mo, the W-substituted alloys come to be in the form of a BCC mono phase and their hydrogen adsorption capacity reaches to about 2.7 wt % or more. When W is admixed at an amount equal to that for Mo or V, the resultant alloy products come to decrease their maximal hydrogen adsorption capacity slightly because W has a larger atomic weight.
The hydrogen adsorption and desorption characteristics which an amount each of additives, Mo and W, affects for such heat-treated Ti-Cr-Mo and Ti-Cr-W alloys are shown in FIGs. 9 and 10, respectively. When the additive element is Mo, it has been found that the admixture of Mo at a small amount leads to an increase in hydrogen adsorption capacity, i.e., the hydrogen adsorption capacity becomes maximal at about 3 ± 1.5 at% of the additive Mo while the hydrogen adsorption capacity comes to be gradually decreased in the 5 at% or more Mo regions which have been presumed to be preferable in the prior art. It has also been found that when Mo is admixed at 10 at% or more, the hydrogen adsorption capacity comes to lower less than that of heat-treated Mo-free Ti-Cr alloys. When the additive element is W, it has been observed that the resultant alloy products have a tendency similar to that for the aforementioned Mo. It has thus been found that the admixture of W at a small amount leads to an increase in hydrogen adsorption capacity, i.e., the hydrogen adsorption capacity becomes maximal at about 3 ± 1.5 at% of the additive W while the hydrogen adsorption capacity comes to be gradually decreased in the 5 at% or more W regions which have been presumed to be preferable in the prior art. It has also been found that when W is admixed at 6 at% or more, the hydrogen adsorption capacity comes to lower less than that of heat-treated W-free Ti-Cr alloys.

Hence, these elements Mo and W are preferably admixed therewith at a micro amount so as to increase occupied volume ratios of the BCC phase occurred in such Ti-Cr binary alloys. It is found that Mo and W, as compared for their capability of forming BCC in Ti-Cr alloys, have each a tendency to enable the BCC-occupied volume ratio to increase even upon their admixture at a smaller amount than V's. It is also found that amounts per unit weight of occluded hydrogen therein come to decrease when they are admixed at an excessive amount.

Although each of Mo and W is admixed alone in order to clarify the efficacy of individual admixed elements in the foregoing embodiments, the present invention is not limited to. It is preferred that one of two elements Mo and W may be admixed therewith in combination with the other. For amounts of the admixed elements in this instance, it is preferable that a total amount of admixed elements Mo and W may be less than 5 at%.

As aforementioned, V has an atomic weight approximately equivalent to that of Ti or Cr. Although V is precious, molecular weights of alloy products are changed (increased) little even when an amount of substituents increases. Therefore, there are advantages that amounts of occluded hydrogen do not reduce very much. Accordingly, in order to produce BCC mono phase alloys with a high capacity by melting a large amount of alloys followed by rapidly cooling and, if necessary, heat-treatments, it is forecasted that V may be effectively admixed therein in combination with at least one member selected from the aforementioned Mo, W, etc. Thus, for the aforementioned Ti-Cr-V alloys wherein a low level of V is contained, which have been conventionally presumed to be hardly produced in a BCC phase form, efficacies are examined and proved in case where a replacement with Mo partially takes place.

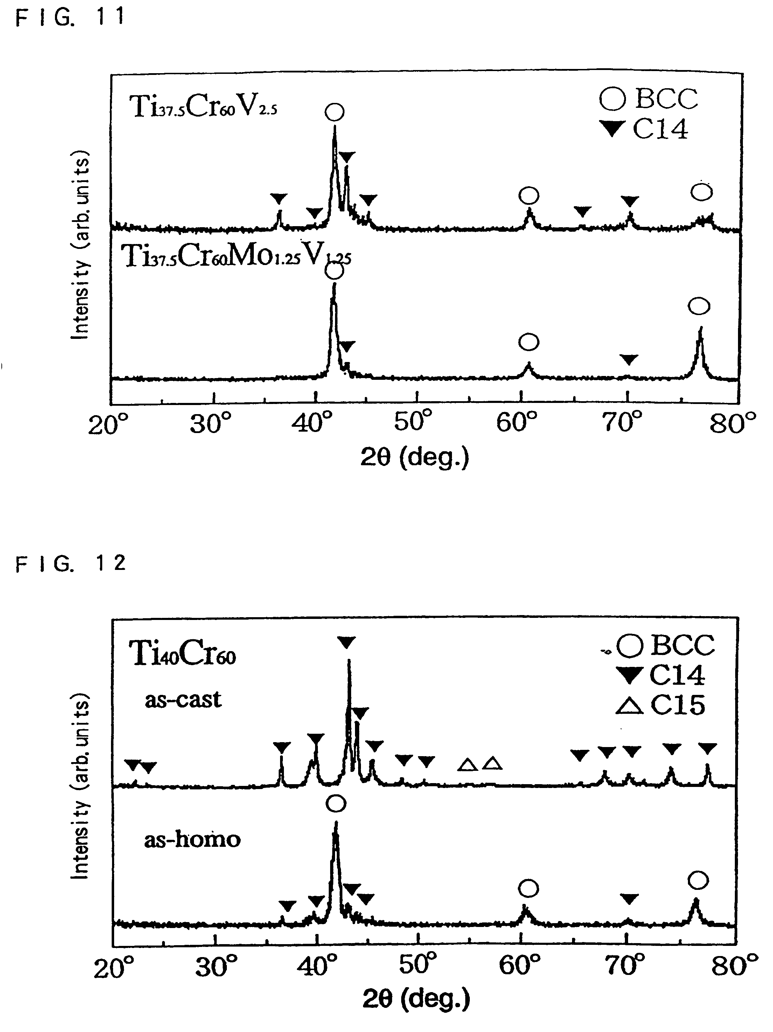

An X-ray diffraction pattern each of as heat-treated Ti_{37.5}Cr₆₀V_{2.5} and Ti_{37.5}Cr₆₀Mo_{1.25}V_{1.25} alloys is shown in FIG. 11. Reflections by the Laves phase are observed for the heat-treated alloy Ti_{37.5}Cr₆₀V_{2.5} as shown in FIG. 11 (identical with the pattern for X=2.5 as shown in FIG. 3) and the hydrogen adsorption and desorption characteristics only reach to an extent of 2.6 %. However, it has been found that the heat-treated alloy Ti_{37.5}Cr₆₀Mo_{1.25}V_{1.25} wherein part of V elements are replaced with Mo are almost in the form of a BCC mono phase and its hydrogen adsorption and desorption characteristics are improved to be an extent of about 2.7 wt%. In this way, V can be admixed therewith in combination with Mo(also W) so as to reduce an amount of precious V to be admixed together with a reduction in amounts of Mo (and/or W) to be admixed, with the result that the occupied volume ratio of BCC phases will increase together with these admixtures, thereby leading to an increase in hydrogen adsorption capacity. Therefore, it can be said that the admixture of V in combination with Mo (and/or W) is a preferable technique for producing inexpensive hydrogen storage metal alloys with a high capability of absorbing and storing hydrogen.

It has been proved that, as aforementioned, by using the above production process characterized in the heat-treatment of the present invention the BCC phase is produced as the main phase at an area (wherein an amount each of additives V, Mo, W, etc. is extremely slight) approximately close to the Ti-Cr binary alloy which is conventionally presumed to produce no BCC phase in the prior art and the resultant alloys exert excellent hydrogen adsorption and desorption characteristics. Accordingly, it has been found that there is a possibility of acquiring excellent hydrogen adsorption and desorption characteristics with regard to Ti-Cr binary alloys, i.e., alloys free of additives such as V, Mo and W but formed from only Ti-Cr, wherein it has been presumed in the prior art that the BCC would be hardly formed as the main phase and accordingly no good hydrogen absorption and release would be achieved. Next, occurred phases and hydrogen adsorption and desorption characteristics are examined for such Ti-Cr binary alloys.

An X-ray diffraction pattern each of as prepared by melting (as cast) and as heat-treated at 1673K (kept at 1400°C for 1 hr followed by water-cooling) Ti₄₀Cr₆₀ is shown in FIG. 12.

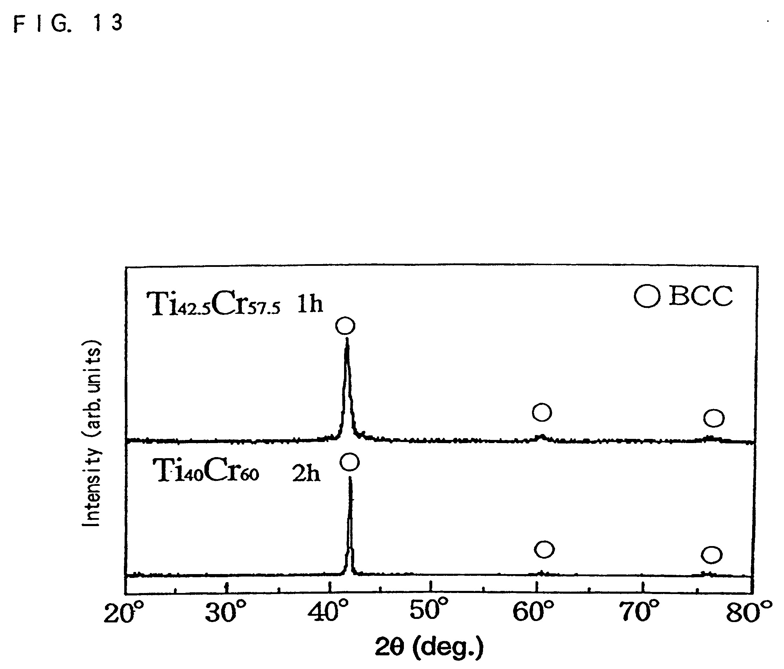

It is apparent from the X-ray diffraction patterns as shown in FIG. 12 that the BCC is produced as the main phase. Next, in order to have a try at improving on Ti-Cr binary alloys for forming the BCC mono phase, researches are conducted on alloy compositions and conditions for heat-treatments. An X-ray diffraction pattern each of Ti_{42.5}Cr_{57.5} alloy materials heat-treated at 1673K (maintained at 1400 °C for 1 hr followed by cooling with water) and Ti₄₁Cr₅₉ alloy materials heat-treated at 1673K wherein a time range for heat-treatment was 2 hours (maintained at 1400 °C for 2 hr followed by cooling with water) is shown in FIG. 13. It is apparent from this drawing that both alloys have the main phase of the BCC. Especially the former is produced in the form of a BCC mono phase regardless of the same heat-treating conditions as for the alloy as shown in FIG. 12. These results indicate that the present invention solves the problems (it has been reported in JP, A, 10-121180, Japanese Unexamined Patent Publication (Kokai) No. 10-158755 (JP, A, 10-158755), Japanese Unexamined Patent Publication (Kokai) No. 11-106859 (JP, A, 11-106859) that it was difficult to produce Ti-Cr binary alloys in the form of a BCC mono phase) by adjusting the alloy compositions to most suitable ones, fitting treating time, etc.

From these experimental Ti-Cr alloy results (see: FIGS. 12 and 13), it is suggested that the Laves phase formation is inhibited easier in alloy Ti_{42.5}Cr_{57.5} than in alloy Ti₄₀Cr₆₀, that is, it is prevented easier in alloys replaced with Ti having a larger atomic radius (0.147 nm) than Cr (0.130 nm). The Laves phase is represented by a composition AB₂ wherein the atomic radius ratio between both atoms A and B, i.e., (rA : rB) is about 1.225 : 1 in order to have a geometrically ideal structure and also characterized by the composition ratio, A : B, having a range. However, the ratio of Ti atomic radius : Cr atomic radius is 1.13 : 1, which is unsuitable for forming an ideal Laves phase structure from an initial stage, and the Ti : Cr atom % ratio, which is a target to be researched according to the present invention, is about 1 : 1.5, i.e., a large amount of Ti apparently occupies a B site, whereupon the atomic radius ratio between the A site and the B site also reduces, etc. These are thought to be sources for inducing results different from those reported in the prior art.

Relying on an expansion of these ideas, the following will be expected: when a replacement with an element having an atomic radius smaller than the A site but greater than the B site takes place, even the intrusion of the substituent elements into A sites will lead to the inhibition of the Laves phase formation and that into B sites will as well. That is, it is forecasted that there are elements facilitating the formation of BCC. It is expected that a substitution with an element (including, for example, Al (0.143 nm), Ga (0.141 nm), Ge (0.137 nm) and Pt (0.139 nm), etc.) having an atomic radius greater than Cr (0.130 nm) but smaller than Ti (0.147 nm) will facilitate the formation of the BCC phase.

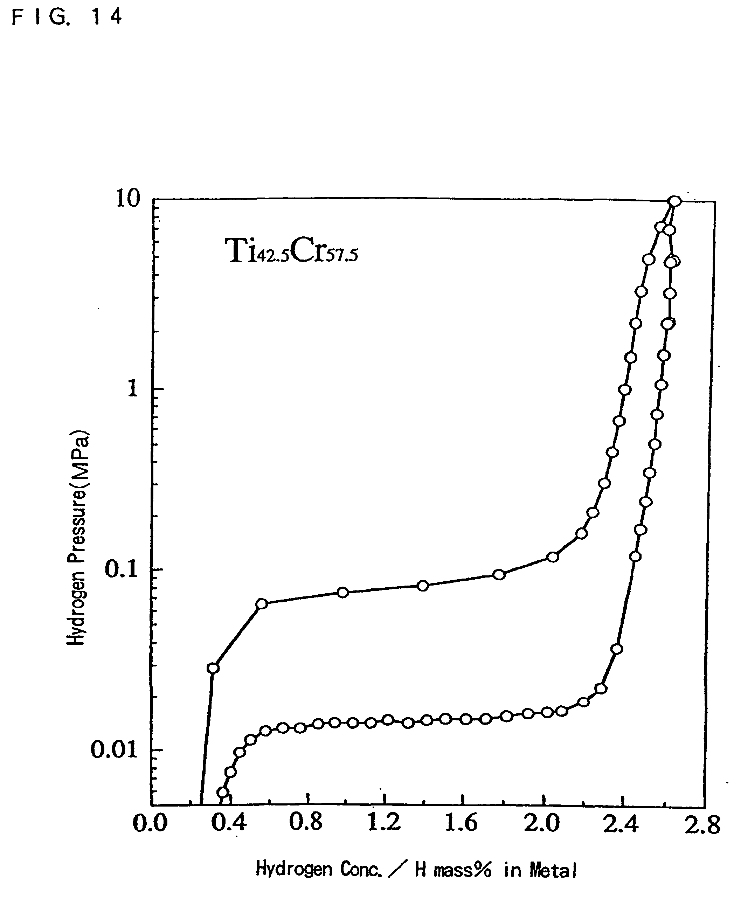

Thus, there has been no report that the Ti-Cr binary alloy was subjected to the formation of a BCC mono phase or the facilitation of a BCC phase formation. This is one of bases supporting the novelty of the present invention. The hydrogen absorption and desorption characteristics of as heat-treated alloy Ti_{42.5}Cr_{57.5} are shown in FIG. 14. Its hydrogen storage capacity is 2.6 wt % or more. Distinctively from Ti-Cr Laves alloys and the like as reported in the prior art, these results evidence that the BCC phase occurring in the Ti-Cr binary alloy has advantageous hydrogen adsorption and desorption characteristics.

In connection with the fact that BCC phases occur in ternary system alloys such as Ti-Cr-V and Ti-Cr-M (M=Mo or W) alloys, which have been disclosed in JP, A, 10-121180, JP, A, 10-158755 and JP, A, 11-106859, the following has been experimentally proved: Ti-Cr-V alloys and Ti-Cr-Mo (W) or Ti-Cr-(V or Mo) alloys according to the present invention are produced in the form of a BCC mono phase or in a BCC main phase form at an extremely micro amount of V, Mo, W, etc. to be admixed (i.e., at a range very close to the Ti-Cr binary alloy), thereby exerting excellent hydrogen adsorption and desorption characteristics. This is attributed to the fact that the BCC phase of such Ti-Cr binary alloys exerts its excellent hydrogen adsorption and desorption characteristics.

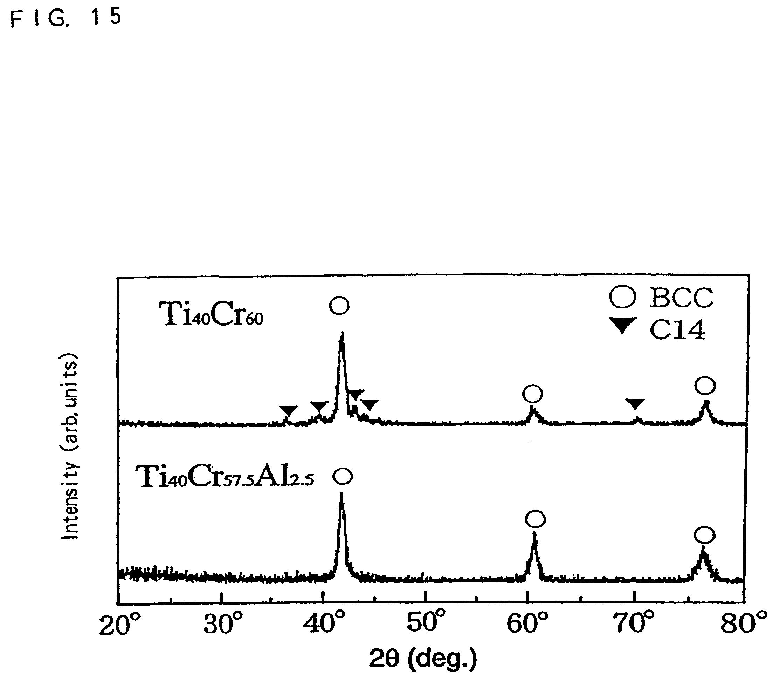

An X-ray diffraction pattern each of as heat-treated alloys Ti₄₀Cr₆₀ and Ti₄₀Cr_{37.5}Al_{2.5} is shown in FIG. 15. It is apparent that a BCC mono phase is almost formed by replacing part of Cr with Al. This alloy is realized by using Ti_{42.5}Cr_{57.5} alloy rather than Ti₄₀Cr₆₀ alloy as shown for Ti-Cr alloys, i.e., by developing the concept that Cr is replaced with Ti having a larger atomic radius than Cr to bring the atomic radius ratio of A to B (rA : rB) to such an extent that it will facilitate the inhibition of a Laves phase formation and applying Al (0.143 nm) which has an atomic radius larger than Cr (0.130 nm) but smaller than Ti (0.147 nm) and is capable of not only inhibiting the formation of a Laves phase but also facilitating the formation of BCC even irrespective of which of A and B sites is replaced. Elements to be admixed therewith are those which have an action similar to Al and may include Ga, Ge, Si, Pt, Au, etc.

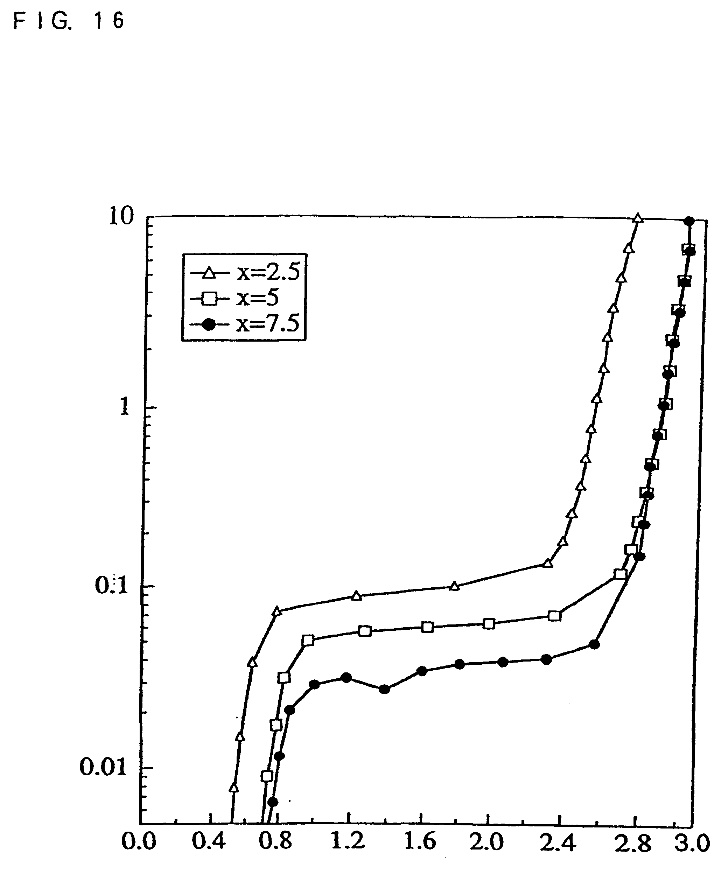

The reason why alloys each having such an alloy composition (such ingredients) can be readily designed is that they are based on Ti-Cr binary BCC alloys in accordance with the present invention, unlike the prior art. It is reported in Japanese Patent Application No. 11-86866 (or 86866/1999) that hydrogen can efficiently be utilized via applications of a difference in temperature, characterized in that body-centered cubic structure hydrogen storage metal alloys each having a two-stage plateau or inclined plateau are subjected to an occlusion of hydrogen at a low temperature followed by an elevation of an alloy working temperature for at least a period of hydrogen release process. In case where the differential temperature method is applied to the aforementioned alloy

VₓTi_{37.5}Cr_{62.5-x}

its hydrogen absorption and desorption characteristics are shown in FIG. 16. It is apparent that the application of the differential temperature method to the alloys of the present invention will lead to a hydrogen storage capacity of about 3.0 wt %. As compared to FIG. 4, it is observed that the differential temperature method derives an increase in hydrogen storage capacity at about 0.2 wt %, and it is therefore experimentally proved that the differential temperature method is effective for alloys attained by the present invention. Its practicability can also be understood.

## Claims

1. A process for producing a hydrogen storage metal alloy having a main phase with body-centered cubic structure wherein the body-centered cubic structure phase enables adsorption and desorption of hydrogen, comprising the steps of:
(1) providing the elements of the alloy corresponding to a composition of the following general composition formula:
(i) Ti_{(100-a-0.4b-n1[d+e])}Cr_{(a-0.6b-n2[d+e])}V_{(b-n3[d+e])}X_{d}Tₑ
wherein
X is at least one or more other elements selected from the group consisting of Al, Ge, Ga, Si, Au and Pt,
T is at least one or more other elements selected from the group consisting of Nb, Ta, Mn, Fe, Al, B, C, Co, Cu, Ga, Ge, a lanthanoid metal, N, Ni, P, and Si, and
20 ≤ a (at%) ≤ 80,
0 ≤ b (at%) ≤ 10;
0 ≤ d (at%) ≤ 20
0 ≤ e (at%) ≤ 10 and
n1+n2+n3 = 1, or
(ii) Ti_{(100-a-0.4b-n1[d+e])}Cr_{(a-0.6b-n2[d+e])}M_{(b-n3[d+e])}X_{d}Tₑ
wherein
M is at least a member selected from molybdenum (Mo) and tungsten (W),
X is at least one or more other elements selected from the group consisting of Al, Ge, Ga, Si, Au and Pt,
T is at least one or more other elements selected from the group consisting of Nb, Ta, Mn, Fe, Al, B, C, Co, Cu, Ga, Ge, a lanthanoid metal, N, Ni, P, and Si, and
20 ≤ a (at%) ≤ 80,
0 ≤ b (at%) ≤ 5;
0 ≤ d (at%) ≤ 20
0 ≤ e (at%) ≤ 10 and
n1+n2+n3 = 1, or
(iii) Ti_{(100-a-0.4b-n1[d+e])}Cr_{(a-0.6b-n2[d+e])}V_{(b-c-n3[d+e])}M_{(c-n4[d+e])}X_{d}Tₑ
wherein
M is at least a member selected from molybdenum (Mo) and tungsten (W),
X is at least one or more other elements selected from the group consisting of Al, Ge, Ga, Si, Au and Pt,
T is at least one or more other elements selected from the group consisting of Nb, Ta, Mn, Fe, Al, B, C, Co, Cu, Ga, Ge, a lanthanoid metal, N, Ni, P, and Si, and
20 ≤ a (at%) ≤ 80,
0 ≤ b (at%) ≤ 10;
0 ≤ c (at%) ≤ 5,
0 ≤ d (at%) ≤ 20
0 ≤ e (at%) ≤ 10 and
n1+n2+n3+n4 = 1,
(2) repeatedly melting and solidifying to form a heated homogeneous alloy;
(3) maintaining the heated homogeneous alloy at a temperature within a range just below the melting point of the alloy for a predetermined time of from 1 minute to 2 hours, and
(4) rapidly cooling the alloy from step (3) in an iced water.

2. The process of claim 1 wherein melting and solidification operations are carried out repeatedly for predetermined times in step (2).

3. The process of any of claims 1 or 2 wherein the predetermined time in step (3) is from 1 minute to 1 hour.

4. The process of any of claims 1 to 3 wherein the elements of the alloy correspond to the composition of the following general composition formula:
Ti_{(100-a-0.4b-n1[d+e])}Cr_{(a-0.6b-n2[d+e])}V_{(b-n3[d+e])}X_{d}Tₑ
wherein
X is at least one or more other elements selected from the group consisting of Al, Ge, Ga, Si, Au and Pt,
T is at least one or more other elements selected from the group consisting of Nb, Ta, Mn, Fe, Al, B, C, Co, Cu, Ga, Ge, a lanthanoid metal, N, Ni, P, and Si, and
20 ≤ a (at%) ≤ 80,
b is within a range of 6 2 (at %);
0 ≤ d (at%) ≤ 20
0 ≤ e (at%) ≤ 10 and
n1+n2+n3 = 1.

## Patentansprüche

1. Verfahren zur Herstellung einer Wasserstoffspeichermetallegierung mit einer Hauptphase mit kubisch raumzentrierter Struktur, wobei die Phase mit kubisch raumzentrierter Struktur eine Adsorption und Desorption von Wasserstoff erlaubt, mit den Stufen, in denen man:
(1) die Elemente der Legierung entsprechend einer Zusammensetzung der folgenden allgemeinen Zusammensetzungsformel bereitstellt:
(i) Ti_{(100-a-0.4b-n1[d+e])}Cr_{(a-0.6b-n2[d+e])}V_{(b-n3[d+e])}X_{d}Tₑ
worin
X wenigstens eines oder mehrere andere Elemente bedeutet, ausgewählt aus der Gruppe, bestehend aus Al, Ge, Ga, Si, Au und Pt,
T wenigstens eines oder mehrere andere Elemente bedeutet, ausgewählt aus der Gruppe, bestehend aus Nb, Ta, Mn, Fe, Al, B, C, Co, Cu, Ga, Ge, ein Lanthanoidenmetall, N, Ni, P und Si und
20 ≤ a (at%) ≤ 80,
0 ≤ b (at%) ≤ 10;
0 ≤ d (at%) ≤ 20
0 ≤ e (at%) ≤ 10 und
n1+n2+n3 = 1 oder
(ii) Ti_{(100-a-0.4b-n1[d+e])}Cr_{(a-0.6b-n2[d+e])}M_{(b-n3[d+e])}X_{d}Tₑ
worin
M wenigstens ein Mitglied, ausgewählt unter Molybden (Mo) und Wolfram (W), bedeutet,
X wenigstens eines oder mehrere andere Elemente bedeutet, ausgewählt aus der Gruppe, bestehend aus Al, Ge, Ga, Si, Au und Pt,
T wenigstens eines oder mehrere andere Elemente bedeutet, ausgewählt aus der Gruppe, bestehend aus Nb, Ta, Mn, Fe, Al, B, C, Co, Cu, Ga, Ge, ein Lanthanoidenmetall, N, Ni, P und Si und
20 ≤ a (at%) ≤ 80,
0 ≤ b (at%) ≤ 5;
0 ≤ d (at%) ≤ 20
0 ≤ e (at%) ≤ 10 und
n1+n2+n3 = 1, oder
(iii) Ti_{(100-a-0.4b-n1[d+e])}Cr_{(a-0.6b-n2[d+e])}V_{(b-c-n3[d+e])}M_{(c-n4[d+e])}X_{d}Tₑ
worin
M wenigstens ein Mitglied, ausgewählt unter Molybden (Mo) und Wolfram (W), bedeutet,
X wenigstens eines oder mehrere andere Elemente bedeutet, ausgewählt aus der Gruppe, bestehend aus Al, Ge, Ga, Si, Au und Pt,
T wenigstens eines oder mehrere andere Elemente bedeutet, ausgewählt aus der Gruppe, bestehend aus Nb, Ta, Mn, Fe, Al, B, C, Co, Cu, Ga, Ge, ein Lanthanoidenmetall, N, Ni, P und Si und
20 ≤ a (at%) ≤ 80,
0 ≤ b (at%) ≤ 10;
0 ≤ c (at%) ≤ 5,
0 ≤ d (at%) ≤ 20
0 ≤ e (at%) ≤ 10 und
n1+n2+n3+n4 = 1,
(2) wiederholtes Schmelzen und Verfestigen durchführt zur Ausbildung einer erhitzten homogenen Legierung;
(3) die erhitzte homogene Legierung bei einer Temperatur in einem Bereich gerade unterhalb des Schmelzpunktes der Legierung für eine vorgegebene Zeit von 1 Minute bis 2 Stunden hält und
(4) die Legierung aus Stufe (3) in Eiswasser schnell abkühlt.

2. Verfahren nach Anspruch 1, wobei die Schmelz- und Verfestigungsvorgänge in Stufe (2) wiederholt für vorgegebene Zeiten durchgeführt werden.

3. Verfahren nach einem der Ansprüche 1 oder 2, wobei die vorgegebene Zeit in Stufe (3) von 1 Minute bis 1 Stunde beträgt.

4. Verfahren nach einem der Ansprüche 1 bis 3, wobei die Elemente der Legierung der Zusammensetzung der folgenden allgemeinen Zusammensetzungsformel entsprechen:
Ti_{(100-a-0.4b-n1[d+e])}Cr_{(a-0.6b-n2[d+e])}V_{(b-n3[d+e])}X_{d}Tₑ
worin
X wenigstens eines oder mehrere andere Elemente bedeutet, ausgewählt aus der Gruppe, bestehend aus Al, Ge, Ga, Si, Au und Pt,
T wenigstens eines oder mehrere andere Elemente bedeutet, ausgewählt aus der Gruppe, bestehend aus Nb, Ta, Mn, Fe, Al, B, C, Co, Cu, Ga, Ge, ein Lanthanoidenmetall, N, Ni, P und Si und
20 ≤ a (at%) ≤ 80,
b liegt innerhalb eines Bereichs von 6 ± 2 (at %);
0 ≤ d (at%) ≤ 20
0 ≤ e (at%) ≤ 10 und
n1+n2+n3 = 1.

## Revendications

1. Procédé de production d'un alliage métallique d'accumulation d'hydrogène ayant une phase principale de structure cubique centrée, la phase de structure cubique centrée permettant l'adsorption et la désorption de l'hydrogène, comprenant les étapes suivantes :
(1) la disposition des éléments de l'alliage correspondant à une composition de formule générale suivante de composition :
(i) Ti_{(100-a-0,4b-n1(d+e))}Cr_{(a-0,6b-n2(d+e))}V_{(b-n3(d+e))}X_{d}Tₑ
dans laquelle
X est au moins un ou plusieurs autres éléments choisis dans le groupe constitué par Al, Ge, Ga, Si, Au et Pt,
T est au moins un ou plusieurs autres éléments choisis dans le groupe constitué par Nb, Ta, Mn, Fe, Al, B, C, Co, Cu, Ga, Ge, un métal de la série du lanthane, N, Ni, P et Si, et
20 ≤ a (% atomique) ≤ 80
0 ≤ b (% atomique) ≤ 10
0 ≤ d (% atomique) ≤ 20
0 ≤ e (% atomique) ≤ 10 et
n1 + n2 + n3 = 1, ou
(ii) Ti_{(100-a-0,4b-n1(d+e))}Cr_{(a-0,6b-n2(d+e))}M_{(b-n3(d+e))}X_{d}Tₑ
dans laquelle
M est au moins un élément choisi parmi le molybdène (MO) et le tungstène (W),
X est au moins un ou plusieurs autres éléments choisis dans le groupe constitué par Al, Ge, Ga, Si, Au et Pt,
T est au moins un ou plusieurs autres éléments choisis dans le groupe constitué par Nb, Ta, Mn, Fe, Al, B, C, Co, Cu, Ga, Ge, un métal de la série du lanthane, N, Ni, P et Si, et
20 ≤ a (% atomique) ≤ 80
0 ≤ b (% atomique) ≤ 5
0 ≤ d (% atomique) ≤ 20
0 ≤ e (% atomique) ≤ 10 et
n1 + n2 + n3 = 1, ou
(iii) Ti_{(100-a-0,4b-n1(d+e))}Cr_{(a-0,6b-n2(d+e))}V_{(b-c-n3(d+e))}M_{(c-n4(d+e))}X_{d}Tₑ
dans laquelle
M est au moins un élément choisi parmi le molybdène (MO) et le tungstène (W),
X est au moins un ou plusieurs autres éléments choisis dans le groupe constitué par Al, Ge, Ga, Si, Au et Pt,
T est au moins un ou plusieurs autres éléments choisis dans le groupe constitué par Nb, Ta, Mn, Fe, Al, B, C, Co, Cu, Ga, Ge, un métal de la série du lanthane, N, Ni, P et Si, et
20 ≤ a (% atomique) ≤ 80
0 ≤ b (% atomique) ≤ 10
0 ≤ c (% atomique) ≤ 5
0 ≤ d (% atomique) ≤ 20
0 ≤ e (% atomique) ≤ 10 et
n1 + n2 + n3 + n4 = 1,
(2) la fusion et la solidification répétées pour la formation d'un alliage homogène chauffé,
(3) le maintien de l'alliage homogène chauffé à une température comprise dans une plage juste inférieure à la température de fusion de l'alliage pendant un temps prédéterminé compris entre 1 min et 2 h, et
(4) le refroidissement rapide de l'alliage obtenu dans l'étape (3) dans de l'eau glacée.

2. Procédé selon la revendication 1, dans lequel les opérations de fusion et de solidification sont exécutées de manière répétée pendant des temps prédéterminés au cours de l'étape (2).

3. Procédé selon la revendication 1 ou 2, dans lequel le temps prédéterminé de l'étape (3) est compris entre 1 min et 1 h.

4. Procédé selon l'une quelconque des revendications 1 à 3, dans lequel les éléments de l'alliage correspondent à la composition de formule générale suivante de composition :
Ti_{(100-a-0,4b-n1(d+e))}Cr_{(a-0,6b-n2(d+e))}V_{(b-n3(d+e))}X_{d}Tₑ
dans laquelle
X est au moins un ou plusieurs autres éléments choisis dans le groupe constitué par Al, Ge, Ga, Si, Au et Pt,
T est au moins un ou plusieurs autres éléments choisis dans le groupe constitué par Nb, Ta, Mn, Fe, Al, B, C, Co, Cu, Ga, Ge, un métal de la série du lanthane, N, Ni, P et Si, et
20 ≤ a (% atomique) ≤ 80
b (% atomique) est compris dans la plage de 6 ± 2,
0 ≤ d (% atomique) ≤ 20
0 ≤ e (% atomique) ≤ 10 et
n1 + n2 + n3 = 1.
